# EUROPÄISCHE PATENTSCHRIFT

(11) **EP 0 850 196 B1**
(45) Veröffentlichungstag und Bekanntmachung des Hinweises auf die Patenterteilung: **26.06.2002**
(21) Anmeldenummer: 96932498.7
(22) Anmeldetag: 12.09.1996
(51) Int. Cl.: C01B 33/158, C01B 33/16, B01J 31/02

(54) **VERFAHREN ZUR HERSTELLUNG ORGANOFUNKTIONALISIERTER AEROGELE**
PROCESS FOR THE PRODUCTION OF ORGANOFUNCTIONALISED AEROGELS
PROCEDE DE PRODUCTION D'AEROGELS ORGANOFONCTIONNALISES

(30) Priorität: 15.09.1995 DE 19534198
(43) Veröffentlichungstag der Anmeldung: 01.07.1998
(73) Patentinhaber: CABOT CORPORATION, Boston, Massachusetts 02210-2019 (US)
(72) Erfinder: SCHWERTFEGER, Fritz, D-60529 Frankfurt am Main (DE); ZIMMERMANN, Andreas, D-64347 Griesheim (DE)
(74) Vertreter: Luderschmidt, Schüler & Partner GbR
(86) Internationale Anmeldenummer: EP9603987
(87) Internationale Veröffentlichungsnummer: WO9710177

(56) Entgegenhaltungen:
- EP-A- 0 443 860
- DE-A- 2 433 409
- DE-A- 2 826 664
- CHEMICAL ABSTRACTS, vol. 99, no. 11, 12.September 1983 Columbus, Ohio, US; abstract no. 88364, KORNETKA & AL.: "Organosilicon compounds" XP002022443 & PL,B,117 627 (UNIVERSYTET IM. ADAMA MICKIEIWCZA, POL.) 30.September 1982
- CHEMICAL ABSTRACTS, vol. 95, no. 5, 3.August 1981 Columbus, Ohio, US; abstract no. 43335, LANGER & AL.: "Organic derivatives of silica" XP002022445 & PL,A,108 383 (UNIVERSYTET IM. ADAMA MICKIEWICZA, POL.) 17.Dezember 1977
- DATABASE WPI Section Ch, Week 8112 Derwent Publications Ltd., London, GB; Class J01, AN 81-20785D XP002022453 & SU,A,710 615 (MOSCOW LOMONOSOV UNIV) , 25.Januar 1980

## Beschreibung

Die Erfindung betrifft ein Verfahren zur Herstellung organofunktionalisierter Aerogele, organofunktionalisierte Aerogele und ihre Verwendung.

Aerogele sind hochporöse Materialien mit niedriger Dichte, die durch Bildung eines Gels mit anschließender Entfernung der Flüssigkeit unter Erhaltung der Gelstruktur hergestellt werden.

Nach einer enger gefaßten Definition (siehe z.B. Gesser und Goswami, Chem. Rev. 1989, 89, 767) versteht man unter Aerogelen Materialien, bei denen die Flüssigkeit aus dem Gel unter überkritischen Bedingungen entfernt wird, während man bei Geltrocknung unter unterkritischen Bedingungen von Xerogelen und im Falle der Entfernung der Flüssigkeit aus dem gefrorenen Zustand durch Sublimation von Kryogelen spricht.

Aerogele im Sinne der vorliegenden Erfindung umfassen all diese Materialien und können außer Luft auch beliebige andere Gase enthalten.

Aufgrund ihrer hohen Porosität haben Aerogele interessante physikalische Eigenschaften, aufgrund derer sie sich unter anderem als Wärmeisolationsmaterialien, akustische Materialien, lumineszierende Sonnenkollektoren, Gasfilter, Katalysatoren oder Trägermaterialien eignen.

Für viele dieser Anwendungen ist es wünschenswert, die chemischen Eigenschaften der Aerogele modifizieren zu können, beispielsweise durch den Einbau funktioneller Gruppen.

In der DE-A-40 02 287 sind funktionalisierte anorganische Xerogele beschrieben. Unter den dort angegebenen Herstellungsbedingungen werden jedoch keine Produkte mit Gelstrukturen erhalten, es handelt sich also nicht um Aerogele im Sinne der vorliegenden Erfindung.

Aerogele, die mit Aminoalkoholen verethert wurden, werden in der US-A 5,270,027 beschrieben. Solche Etherbrücken sind jedoch nicht besonders langzeitstabil, so daß eine allmähliche Abspaltung der organischen Gruppen stattfindet.

In der EP-A 0 629 442 werden chelatisierte Übergangsmetalle enthaltende Aerogele als Katalysatoren offenbart und Cao und Hunt (Mat. Res. Soc. Symp. Proc. 1994, Vol. 346, 631) beschreiben aminofunktionalisierte Aerogele.

Schubert et al. (Mat. Res. Soc. Symp. Proc. 1994, Vol. 346, 151, deutsche Patentanmeldung P 195 33 851.0) haben Aerogele mit verschiedenen funktionalisierten Resten synthetisiert.

All diesen Materialien ist gemein, daß das zugrundeliegende Aerogel aus Tetraalkoxysilanen hergestellt wird. Diese Ausgangsverbindungen stellen unter anderem jedoch einen außerordentlich hohen Kostenfaktor dar, der einer großtechnischen Herstellung der Aerogele im Wege steht.

Wünschenswert war es daher, ein kostengünstiges Verfahren zu finden, das zur Herstellung organofunktioneller Aerogele im technischen Maßstab geeignet ist.

Es wurde nun überraschend gefunden, daß sich organofunktionell modifizierte Aerogele unter Verwendung von Wasserglas als Ausgangsmaterial herstellen lassen.

Es ist bekannt (siehe z.B. EP-A 0 396 076) Aerogele auf Basis von Wasserglas herzustellen und gegebenenfalls (siehe z.B. EP-A 0 658 513) mit unreaktiven organischen Resten zu modifizieren.

Eine mögliche Modifizierung mit funktionellen organischen Resten läßt sich diesen Schriften jedoch nicht entnehmen.

Gegenstand der Erfindung ist daher ein Verfahren zur Herstellung von organofunktionell modifizierten Aerogelen, bei dem man ein Wasserglas durch Polykondensation vergelt und anschließend durch Trocknen unter Erhalt der Gelstruktur zu einem Aerogel umsetzt, das dadurch gekennzeichnet ist, daß man das Gel vor dem Trocknen mit einer mindestens bifunktionellen organischen Verbindung zur Reaktion bringt, wobei mindestens eine funktionelle Gruppe zur Anknüpfung an das Aerogel dient und mindestens eine funktionelle Gruppe erhalten bleibt, wobei letztere einen Kohlenwasserstoffrest enthält, der mindestens eine funktionelle Gruppe aufweist.

Organofunktionell modifiziert bedeutet im Sinne der Erfindung, daß das Aerogel, vorzugsweise auf der inneren Oberfläche, gleiche oder verschiedene organische Reste enthält, die mindestens eine, vorzugsweise eine, zwei oder drei, funktionelle Gruppen aufweisen. Als funktionelle Gruppen bezeichnet man dabei Strukturen in den organischen Resten, die polare Atombindungen aufweisen, vorzugsweise bedingt durch die Anwesenheit von Heteroatomen.

Beispiele für funktionelle Gruppen sind Halogene, Pseudohalogene, Hydroxy-, Thio-, Amino-, Amido-, Ether-, Ester-, Säure-, Formyl- oder Ketogruppen.

Erfindungsgemäß werden die Aerogele aus Wasserglas hergestellt. Als Wasserglas bezeichnet man wasserlösliche Alkalisilikate, vorzugsweise Natriumund/oder Kaliumsilikate. Im Sinne der Erfindung beinhaltet der Begriff auch wasserlösliche komplexe Alkalimetallate anderer Metalle, wie Al, Ti, Zr oder Sn, bevorzugt ist jedoch Si-Wasserglas.

Die funktionelle organische Verbindung enthält mindestens eine Gruppe, die sie zur Reaktion mit den ursprünglichen Hydroxyl- oder Ethergruppen der Aerogeloberfläche befähigt, beispielsweise eine Halogen-, vorzugsweise Chlor-, Alkohol-, Ether-, Säure-, vorzugsweise Carbonsäure-, oder Esterfunktion. Beispielsweise kann es sich um Aminoalkohole der allgemeinen Formel R¹-NH-R²-OH, mit R¹ = H, C₁-C₄-Alkyl, -(CH₂)₂₋₃-OH und R² = C₁-C₄-Alkylen handeln.

Bevorzugt sind jedoch funktionelle organische Verbindungen der allgemeinen Formel

Rₙ-MXₘ

Dabei ist M Si, Al, Zr, Ti, Sn, vorzugsweise Si und n und m sind ganze Zahlen größer als Null, deren Summe der Wertigkeit von M entspricht. R ist ein C₁-C₂₂-Kohlenwasserstoffrest, der mindestens eine funktionelle Gruppe enthält, vorzugsweise aus der Gruppe OH, OR³, COOR³, OCOR³, SO₃R³, SO₂Cl, F, Cl, Br, NO₂, CN, SCN, -NCO, -OCN, NR³₂, -CONR₂, -O-CO-O-, Oxiran-2,3-diyl, SR³, wobei R³ gleich oder verschieden H, C₁-C₂₀-Alkyl oder C₄-C₁₀-Aryl ist; die Reste R³ sind unabhängig voneinander gleich oder verschieden oder können verbrückt sein. X ist ein Halogen, vorzugsweise Cl, oder ein Rest -OR⁴, -SR⁴ oder -NR⁴₂, wobei R⁴ H, einen geradkettigen oder verzweigten aliphatischen Rest C₁-C₁₈, Benzyl oder C₄-C₁₀-Aryl bedeutet.
Ist m mindestens zwei, so können die Reste X unabhängig voneinander gleich oder verschieden oder verbrückt sein. Der Index n ist vorzugsweise 1 oder 2, besonders bevorzugt 1.

Es können auch Mischungen von zwei oder mehr funktionellen organischen Verbindungen eingesetzt werden.

Besonders bevorzugt sind funktionelle organische Verbindungen, bei denen R die Bedeutung -Y-Z hat, wobei
- Y: C₁-C₈-Alkylen, vorzugsweise geradkettig, C₁-C₈-Alkenylen oder -[(CH₂)₂O]ₙ-CH₂, mit n = 1, 2, 3;
- Z: F, Cl, Br, I, CN, SCN, -NCO, -OCN, NR'R", OR', SR', PR'R", Oxiran-2-yl;
- R', R": gleich oder verschieden H, C₁-C₁₂-Alkyl, C₄-C₁₀-Aryl oder Benzyl
bedeuten.

Weiterhin bevorzugt als funktionelle organische Verbindung sind Verbindungen des Typs RₙR⁵ₛMXₘ, wobei n, s, m natürliche Zahlen sind und zusammen der Wertigkeit von M entsprechen und wobei R, M, X die obigen Bedeutungen haben. R⁵ ist Wasserstoff oder ein nicht reaktiver organischer linearer, verzweigter, zyklischer, aromatischer oder heteroaromatischer Rest, wie C₁-C₁₈-Alkyl, bevorzugt C₁-C₆-Alkyl, vorzugsweise Methyl oder Ethyl, Cyclohexyl oder Phenyl; die Reste R⁵ sind unabhängig voneinander gleich oder verschieden oder können verbrückt sein.

Die funktionelle organische Verbindung wird im allgemeinen in einem Anteil von bis zu 30, vorzugsweise 20, besonders bevorzugt 10 Gew.-%, bezogen auf das nicht getrocknete Aerogel, eingesetzt.

Durch Umsetzung mit funktionellen organischen Verbindungen werden die ursprünglichen Oberflächengruppen durch Gruppen des Typs MRₙ bzw. MRₙR⁵ₛ ersetzt.

Die Verbindungen der Formel RₙMXₘ sind kommerziell erhältlich oder lassen sich nach an sich bekannten, dem Fachmann geläufigen Methoden herstellen.

Solche Methoden werden beispielsweise in dem Artikel "Hybrid Inorganic-Organic Materials by Sol-Gel Processing of Organofunctional Metal Alkoxides" (U. Schubert et al., Chem. Mat., 1995, 7, 2010) beschrieben.

Herstellungsmethoden für die bevorzugten Organoalkoxysilane, wie beispielsweise die Hydrosilylierung ungesättigter Verbindungen mit anschließender Alkoholyse: 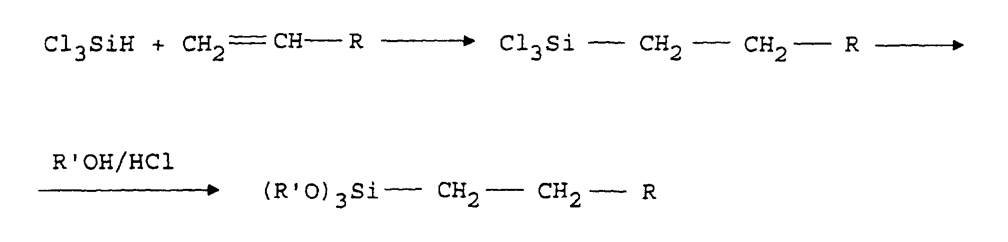 sind u.a. beschrieben in W. Noll, Chemie und Technologie der Silicone, Verlag Chemie, Weinheim, 1968 und U. Deschler, P. Kleinschmit, P. Panster, Angew. Chem. 1986, 98, 237 (Int. Ed. Engl. 1986, 25, 236).

Zahlreiche Einzelbeispiele enthält E.P. Plueddermann, Silane Coupling Agents, 2. Aufl., S. 31-54, Plenum Press., New York 1991.

Kommerziell erhältlich sind beispielsweise Alkoxysilane (Alkyl-O)₃-SiR, in denen R Acetoxypropyl, N-(3-Acryloxy-2-hydroxypropyl)-3-aminopropyl, 3-Acryloxypropyl, 3-(N-Allylamino)propyl, Allyl, 4-Aminobutyl, (Aminoethylaminomethyl)phenethyl, N-(2-Aminoethyl)-3-aminopropyl, N-(6-Aminohexyl)-aminopropyl, 3-(3-Aminophenoxy)propyl, Aminophenyl, 3-(1-Aminopropoxy)-3,3-dimethyl-1-propenyl, 3-Aminopropyl, w-Aminoundecyl, Amyl, Benzyl, 5-Biscycloheptenyl, Bis(2-hydroxyethyl)-3-aminopropyl, Bromooctyl, Bromoethyl, Bromophenyl, 3-Bromopropyl, 3-Butenyl, Chloroethyl, Chlorophenyl, 3-Chloropropyl, 2-(4-Chlorosulfonylphenyl)ethyl, 2-Cyanoethyl, 3-Cyanopropyl, 2-(3-Cyclohexenyl)ethyl, (N,N-Diethyl-3-aminopropyl), Diethylphosphatoethyl, Diethyl(trimethylsitylmethyl)malonat, N,N-Dimethylaminopropyl, 2-(Diphenylphosphino)ethyl, 2-(3,4-Epoxycyclohexyl)ethyl, 3-(4-Formylphenoxy)propyl, GLYMO, 3-(Heptafluoroisopropoxy), lodopropyl, 3-lsocyanatopropyl, 3-Mercaptopropyl, Methacrylamidopropyl, MEMO, 3-(4-Methoxyphenoxy)propyl, Styrylethyl, 3-Thiocyanatopropyl, N-Triethoxysilylpropyl)-dansylamide, Fluoroverbindungen und/oder Diethylendiaminpropyl bedeutet.

Die funktionellen organischen Verbindungen können auch in Mischung mit nicht reaktiven, oberflächenmodifizierenden Substanzen der allgemeinen Formel R⁶ₙMXₘ verwendet werden. Dabei werden ursprüngliche Oberflächengruppen teilweise durch inerte Gruppen des Typs MR⁶ₙ ersetzt. Die Indices n und m sind ganze Zahlen größer als Null, deren Summe der Wertigkeit von M, das die gleiche Bedeutung wie oben hat, entspricht. R⁶ ist Wasserstoff oder ein nicht reaktiver organischer linearer, verzweigter, zyklischer, aromatischer oder heteroaromatischer Rest wie C₁-C₁₈-Alkyl, bevorzugt C₁-C₆-Alkyl, vorzugsweise Methyl oder Ethyl, Cyclohexyl oder Phenyl; die Reste R⁶ sind unabhängig voneinander gleich oder verschieden oder können verbrückt sein. Weiter ist X ein Halogen, vorzugsweise Cl, oder ein Rest -OR⁷, -SR⁷ oder -NR⁷₂, wobei R⁷ einen geradkettigen oder verzweigten, gegebenenfalls substituierten aliphatischen Rest C₁ bis C₁₈ darstellt.
Ist m mindestens zwei, so können die X unabhängig voneinander gleich oder verschieden oder verbrückt sein. Es können auch Mischungen der oberflächenmodifizierenden Substanzen eingesetzt werden.

Bevorzugt werden oberflächenmodifizierende Substanzen der Formel R⁶₄₋ₙSiClₙ oder R⁶₄₋ₙSi(OR⁷)ₙ mit n = 1 bis 3 eingesetzt, wobei R⁶ und R⁷ die vorstehenden Bedeutungen haben. Auch Silazane sind geeignet. Vorzugsweise verwendet man Methyltrichlorsilan, Dimethyldichlorsilan, Trimethylchlorsilan, Trimethylmethoxysilan oder Hexamethyldisilazan.

Auch diese Verbindungen sind kommerziell erhältlich oder lassen sich nach an sich bekannten, dem Fachmann geläufigen Methoden herstellen.

Solche Methoden werden beispielsweise in dem Artikel "Hybrid Inorganic-Organic Materials by Sol-Gel Processing of Organofunctional Metal Alkoxides" (U. Schubert et al., Chem. Mat., 1995,7, 2010) beschrieben.

Bevorzugt sind Mischungen aus nichtfunktionellen und funktionellen oberflächenmodifizierenden Substanzen im Verhältnis 0-1:1, vorzugsweise 0-0,5:1.

Das erfindungsgemäße Verfahren wird im folgenden am Beispiel von silikatischem Wasserglas beschrieben.

Zunächst wird eine, vorzugsweise wäßrige Lösung von Wasserglas durch Zugabe von Säure in Kieselsäure umgewandelt und anschließend im stark sauren oder basischen zu einem Gel (Kieselsäurehydrogel) polykondensiert. Bevorzugt bringt man eine wäßrige Wasserglaslösung mit Hilfe eines sauren lonenaustauscherharzes oder einer Mineralsäure auf einen pH-Wert < 3,0 und polykondensiert die dabei entstandene Kieselsäure durch Zugabe einer Base zu einem SiO₂-Gel. Falls im ersten Schritt eine Mineralsäure benutzt wurde, wird das Gel vorzugsweise mit Wasser weitgehend elektrolytfrei gewaschen.

Es wird vorzugsweise ein saures lonenaustauscherharz eingesetzt; dabei sind vor allem solche geeignet, die Sulfonsäuregruppen enthalten. Falls man Mineralsäuren einsetzt, sind vor allem Salzsäure und Schwefelsäure geeignet. Als Wasserglas wird im allgemeinen Natrium- und/oder Kaliumwasserglas verwendet.

Im zweiten Schritt, der Polykondensation, wird als Base im allgemeinen NH₄OH, NaOH, KOH, Al(OH)₃ und/oder kolloidale Kieselsäure eingesetzt. Falls anfangs Mineralsäure verwendet wurde, wird das mit Hilfe der Base erzeugte SiO₂-Gel mit Wasser elektrolytfrei gewaschen; vorzugsweise wird dabei solange gewaschen, bis das ablaufende Waschwasser dieselbe elektrische Leitfähigkeit hat wie entmineralisiertes Wasser.

Das erhaltene Gel läßt man vor dem folgenden Lösungsmittelaustausch vorzugsweise altern, und zwar im allgemeinen bei 0 bis 100°C, vorzugsweise bei 60 bis 100°C, und einem pH-Wert von 4 bis 11, vorzugsweise 4 bis 8. Die Zeit dafür beträgt im allgemeinen 10 Sekunden bis 48 Stunden, vorzugsweise 10 Sekunden bis 5 Stunden.

Anschließend wird das im Gel vorhandene Wasser durch eine dem Gel gegenüber inerte, vorzugsweise leichtsiedende organische Flüssigkeit verdrängt.

Vorzugsweise wäscht man das Gel solange mit der organischen Flüssigkeit, bis der Wassergehalt kleiner als 2 Gew.-% ist. Als organische Flüssigkeit werden im allgemeinen aliphatische Alkohole, Ether, Ester oder Ketone oder aliphatische oder aromatische Kohlenwasserstoffe verwendet. Bevorzugte Lösungsmittel sind Methanol, Ethanol, n-Propanol, i-Propanol, Aceton, Tetrahydrofuran, Essigsäureethylester, Dioxan, n-Hexan, Toluol. Man kann auch Gemische aus den genannten Flüssigkeiten verwenden. Man kann auch zuerst das Wasser mit einer wassermischbaren Flüssigkeit, beispielsweise einem Alkohol, auswaschen und dann diesen mit einem Kohlenwasserstoff verdrängen.

Insbesondere wenn eine überkritische Trocknung beabsichtigt ist, kann das Lösungsmittel in einem weiteren Schritt gegen eine andere Flüssigkeit, wie Methanol oder Aceton, ausgetauscht werden.

Die bisherigen Schritte werden im allgemeinen bei einer Temperatur zwischen dem Gefrierpunkt und dem Siedepunkt der organischen Flüssigkeit durchgeführt.

Falls die funktionelle organische Verbindung nicht bereits der Wasserglas- bzw. Kieselsäurelösung, d.h. vor der Gelbildung, zugesetzt wurde, wird sie vorzugsweise dem flüssigkeitshaltigen Gel zugesetzt.

Das oberflächenmodifizierte Aerogel wird im folgenden Schritt nach im allgemeinen bekannten, dem Fachmann geläufigen Methoden über- oder unterkritisch getrocknet.

Die Trocknung des Gels unter überkritischen Bedingungen kann man beispielsweise in Anlehnung an die in der EP-A-0 067 741 ( = US-A 4,432,956) und bei U. Schubert et al., I. Non. Cryst. Solids, 1995, 186, 37-43 beschriebenen Verfahren durchführen.

Kritische Konstanten für Lösungsmittel kann man den bekannten Tabellenwerken entnehmen, z.B. dem Handbook of Chemistry and Physics, 40. Ausgabe (1958), Seiten 2302 bis 2304. Die kritische Temperatur und der kritische Druck sind beispielsweise für Kohlendioxid 31,1°C und 73,0 atm., für Methanol 240°C und 78,7 atm., für Ethanol 243,1°C und 63,1 atm., für n-Propanol 263,7°C und 49,95 atm. und für iso-Propanol 235°C und 53 atm..

Aus ökonomischen Gründen wird bevorzugt aus einem Alkohol, wie Methanol, oder Aceton überkritisch getrocknet.

Generell bevorzugt ist jedoch die unterkritische Trocknung, wobei das Gel bei einer Temperatur unter der kritischen Temperatur der in dem Gel enthaltenen Flüssigkeit und einem Druck von 0,001 bar bis zu dem Dampfdruck dieser Flüssigkeit bei dieser Temperatur getrocknet wird.

in einer besonderen Ausführungsform wird das oberflächenmodifizierte Gel bei Temperaturen von -30 bis 200°C, vorzugsweise 0 bis 200°C, sowie einem Druck von 0,001 bis 20 bar, bevorzugt 0,01 bis 5 bar, besonders bevorzugt 0,1 bis 2 bar, getrocknet. Höhere Temperaturen als 200°C und/oder höhere Drücke als 20 bar sind ohne weiteres möglich, aber sie sind mit überflüssigem Aufwand verbunden und bringen keine Vorteile mit sich. Die Trocknung wird im allgemeinen so lange fortgeführt, bis das Gel einen Lösungsmittel-Restgehalt von weniger als 0,1 Gew.-% aufweist.
Als Trocknungsverfahren geeignet sind zum Beispiel die Kontakt- und Konvektionstrocknung. Bei der Konvektionstrocknung kann das Gas oder Gasgemisch auch mit höherer Temperatur auf das Lyogel treffen.

Darüber hinaus kann die Trocknung des Gels durch Verwendung von dielektrischen Trocknungsverfahren, z.B. Mikrowellentrocknung, wesentlich beschleunigt werden. Dazu wird nach der Oberflächenmodifikation das Lösungsmittel, falls erforderlich, gegen ein Lösungsmittel ausgetauscht, das Mikrowellen gut absorbiert wie z.B. Wasser, Ethanol oder vorzugsweise Aceton. Die Gele lassen sich dann in einem Mikrowellentrockner schnell trocknen.

Gegenstand der Erfindung ist auch ein Aerogel, erhältlich nach dem erfindungsgemäßen Verfahren.

Bevorzugt sind solche Produkte, bei denen der funktionalisierte Kohlenwasserstoffrest an ein Metall (bzw. Halbmetallatom) des Aerogels gebunden ist.

Es können auch mehrere funktionalisierte Kohlenwasserstoffe an das selbe Metall(Halbmetall)Atom des Aerogels gebunden sein.

Besonders bevorzugt ist der funktionalisierte Kohlenwasserstoffrest, eine unverzweigte oder verzweigte Alkylgruppe mit 1 bis 22, vorzugsweise 1 bis 12 C-Atomen, wobei eine oder mehrere CH₂-Gruppen durch -O-, -S-, -CO-, -COO-, -O-CO-O-, -CO-NR'-, -SO-, -SO₂-, -NH-CO-NH-, C₃-C₆-Cycloalkylen, -CH=CH-, -C≡C- oder eine C₄-C₁₀-Arylengruppe, die auch Heteroatome (wie N, S oder O, aufweisen kann; und ein oder mehrere Wasserstoffatome durch F, Cl, Br, I, CN, SCN, -NCO, -OCN, NO₂, SO₃R', PR'₂, CHO ersetzt sein können, wobei R' gleich oder verschieden H, C₁-C₁₂-Alkyl, C₄-C₁₀-Aryl oder Benzyl bedeutet.

Ganz besonders bevorzugt hat der funktionalisierte Kohlenwasserstoffrest die Bedeutung -Y-Z, wobei
- Y: C₁-C₈-Alkylen, vorzugsweise geradkettig, C₁-C₈-Alkenylen oder -[(CH₂)₂O]ₙ-CH₂, mit n = 1, 2, 3;
- Z: F, Cl, Br, I, CN, SCN, -NCO, -OCN, NR'R", OR', SR', PR'R", Oxiran-2-yl;
- R', R": gleich oder verschieden H, C₁-C₁₂-Alkyl, C₄-C₁₀-Aryl oder Benzyl
bedeuten.

Die erfindungsgemäß hergestellten bzw. erfindungsgemäßen Aerogele haben vorzugsweise Porositäten von 70% und höher, besonders bevorzugt 80% und höher.
Ihre Dichte liegt vorzugsweise bei 200 kg/m³ oder darunter, besonders bevorzugt bei 150 kg/m³ oder darunter.

Ebenfalls Gegenstand der Erfindung sind obengenannte Aerogele, die zusätzlich mit nicht reaktiven Kohlenwasserstoffresten oder heterocyclischen Resten modifiziert sind.

Es können auch funktionalisierte Kohlenwasserstoffreste und nicht reaktive Reste an das selbe (Halb)Metallatom gebunden sein.

Die erfindungsgemäßen oder erfindungsgemäß hergestellten Aerogele können darüber hinaus handelsübliche Zusätze, wie z.B. Pigmente und/oder Ruß enthalten.

Ebenfalls vor der Gelherstellung können dem Sol zur Erhöhung der mechanischen Stabilität Fasern zugesetzt werden. Als Fasermaterial können anorganische Fasern, wie Glasfasern oder Mineralfasern, organische Fasern, wie Polyesterfasern, Aramidfasern, Nylonfasern oder Fasern pflanzlichen Ursprungs, sowie Gemische derselben verwendet werden. Die Fasern können auch beschichtet sein, z.B. Polyesterfasern, die mit einem Metall wie Aluminium metallisiert sind.

Die erfindungsgemäßen Aerogele eignen sich für Anwendungen beispielsweise als Katalysatorvorstufen, z.B. zum Anknüpfen von Metallionen oder Metallkomplexen, oder als Sensoren.

Die Erfindung wird durch die Beispiele näher erläutert, ohne dadurch beschränkt zu werden.

### Beispiel 1

1 I einer Natriumwasserglaslösung (mit einem Gehalt von 7 Gew.-% SiO₂ und einem Na₂O:SiO₂ Verhältnis von 1:3,3) wird zusammen mit 0,5 I eines sauren lonenaustauscherharzes (Styroldivinylbenzolcopolymer mit Sulfonsäuregruppen, handelsüblich unter dem Namen ®Duolite C20) gerührt, bis der pH-Wert der wäßrigen Lösung 2,7 ist. Anschließend wird das lonentauscherharz abfiltriert und die wäßrige Lösung mit 1 molarer NaOH-Lösung auf einen pH-Wert von 4,7 eingestellt. Danach wird das entstandene Gel noch 6 Stunden bei 85°C gealtert und anschließend das Wasser mit 3 I Aceton extrahiert. Anschließend wird das acetonhaltige Gel mit Chloropropyltrichlorsilan eingesetzt (50 mg Chloropropyltrichlorsilan pro Gramm nasses Gel). Nach einer Reaktionszeit von 5 Stunden wird das Naßgel mit 1 I Aceton gewaschen. Die Trocknung des Gels erfolgt an Luft (3 Stunden bei 40°C, dann 2 Stunden bei 50°C und 12 Stunden bei 150°C).

Das so erhaltene Aerogel hat eine Dichte von 0,15 g/cm³. Die spezifische Oberfläche nach BET liegt bei 640 m²/g.

### Beispiel 2

1 I einer Natriumwasserglaslösung (mit einem Gehalt von 7 Gew.-% SiO₂ und einem Na₂O:SiO₂ Verhältnis von 1:3,3) wird zusammen mit 0,5 I eines sauren lonenaustauscherharzes (Styroldivinylbenzolcopolymer mit Sulfonsäuregruppen, handelsüblich unter dem Namen ®Duolite C20) gerührt, bis der pH-Wert der wäßrigen Lösung 2,7 ist. Anschließend wird das lonentauscherharz abfiltriert. Die Lösung wird mit Chloropropyltrichlorsilan (50 mg Chloropropyltrichlorsilan pro Gramm Lösung) versetzt und mit 1 molarer NaOH-Lösung auf einem pH-Wert von 4,7 eingestellt. Danach wird das entstandene Gel noch 24 Stunden bei 85°C gealtert und anschließend das Wasser mit 3 I Aceton extrahiert. Die Trocknung des Gels erfolgt an Luft (3 Stunden bei 40°C, dann 2 Stunden bei 50°C und 12 Stunden bei 150°C).

Das so erhaltene Aerogel hat eine Dichte von 0,21 g/cm³. Die spezifische Oberfläche nach BET liegt bei 580 m²/g.

## Patentansprüche

1. Verfahren zur Herstellung von organofunktionell modifizierten Aerogelen, wobei man ein Wasserglas durch Polykondensation vergelt und anschließend durch Trocknen unter Erhalt der Gelstruktur zu einem Aerogel umsetzt, **dadurch gekennzeichnet, daß** man das Gel vor dem Trocknen mit einer mindestens bifunktionellen organischen Verbindung zur Reaktion bringt, wobei mindestens eine funktionelle Gruppe zur Anknüpfung an das Aerogel dient, und mindestens eine funktionelle Gruppe erhalten bleibt, wobei letztere einen Kohlenwasserstoffrest enthält, der mindestens eine funktionelle Gruppe aufweist.

2. Aerogele erhältlich nach einem Verfahren gemäß Anspruch 1.

3. Verwendung von Aerogelen gemäß Anspruch 2, als Katalysatorvorstufen oder Sensoren.

## Claims

1. Method for manufacturing organofunctionally modified aerogels, in which a water glass is gelled by polycondensation, then converted to an aerogel by drying, to obtain a gel structure, **characterised in that** the gel is caused to react, before drying, with an organic compound that is at least bi-functional, in which at least one functional group is used for linking to the aerogel and at least one functional group is retained, and in which the latter contains a hydrocarbon residue which exhibits at least one functional group.

2. Aerogels obtainable by a method according to claim 1.

3. Use of aerogels according to claim 2, as initial catalyst stages or sensors.

## Revendications

1. Procédé de production d'aérogels organofonctionnalisés, dans lequel on gélifie un verre soluble par polycondensation et on transforme ensuite par séchage la structure de gel pour obtenir un aérogel, **caractérisé en ce qu'**on met à réagir le gel avant le séchage avec un composé organique au moins bifonctionnel, dans lequel au moins un groupe fonctionnel sert au rattachement à l'aérogel, et au moins un groupe fonctionnel reste disponible, ce par quoi on obtient finalement un résidu hydrocarboné, qui présente au moins un groupe fonctionnel.

2. Aérogels qu'on peut obtenir avec un procédé selon la revendication 1.

3. Utilisation d'aérogels selon la revendication 2, comme précurseurs de catalyseurs ou comme capteurs.
